# EUROPÄISCHE PATENTSCHRIFT

(11) **EP 1 679 462 B1**
(45) Veröffentlichungstag und Bekanntmachung des Hinweises auf die Patenterteilung: **06.03.2013**
(21) Anmeldenummer: 05023642.1
(22) Anmeldetag: 28.10.2005
(51) Int. Cl.: F16L 1/036, F16L 1/06, B66C 1/56, B66C 3/00, B66C 23/44

(54) **Rohrverlegegerät**
Pipe laying apparatus
Appareil pour pose de tuyau

(30) Priorität: 10.01.2005 DE 102005001141; 19.04.2005 DE 102005018051
(43) Veröffentlichungstag der Anmeldung: 12.07.2006
(73) Patentinhaber: Liebherr-Hydraulikbagger GmbH, 88457 Kirchdorf/Iller (DE)
(72) Erfinder: Zitterbart, Thomas, 89165 Dietenheim (DE); Autenrieth, Oliver, 88457 Kirchdorf/Iller (DE)
(74) Vertreter: Laufhütte, Dieter

(56) Entgegenhaltungen:
- WO-A-99/66244
- DE-A1- 2 225 859
- DE-A1- 2 622 751
- DE-U1- 8 701 385
- US-A- 5 219 265

## Beschreibung

Die Erfindung betrifft ein Rohrverlegegerät, das beispielsweise als Anbaugerät für einen Bagger verwendbar ist.

Das Verlegen von Rohren gestaltet sich sehr aufwendig. Zunächst wird mit einem Bagger ein Graben ausgehoben. In diesen werden die Rohre, die in der Regel über eine Muffenverbindung miteinander verbunden sind, gelegt. Beim Verlegen der Rohre müssen diese miteinander verbunden werden. Insbesondere bei Betonrohren, die beispielsweise bei einer Länge von 5 m und einer Nennweite von 600 mm ein Gewicht von ca. 1000 kg. aufweisen, ist das Einpassen der Rohre ineinander, d. h. das Einstecken des Rohres in die Rohrmuffe des bereits liegenden Rohres nur mit Hilfe mehrerer Bauarbeiter möglich. In der Regel werden diese zu verlegenden Rohre über Ketten an den Stiel eines Baggers gehängt und dann von zwei Bauarbeitern während des Herablassens in den Graben derart verschwenkt, dass sie in die gewünschte Position gelangen. Häufig ist es notwendig, dass der Baggerfahrer noch mit der Rückseite der Baggerschaufel eine Lagekorrektur des abgelegten Rohres im Graben vornimmt, indem er dieses beispielsweise in Längsrichtung fest in die Muffe des bereits verlegten Rohres einschiebt. Bei diesem bekannten Verlegesystem sind also neben dem Baggerfahrer noch zwei weitere Bauarbeiter mit dem Verlegen der Rohre beschäftigt. Das Verlegen ist zeitaufwendig, da jedes einzelne Rohr über entsprechende Ketten mit dem Bagger verbunden werden muß. Nach Ablegen des Rohres müssen die Ketten dann wieder gelöst werden und der Bagger muß dann wieder durch die Aufnahme einer Schaufel umgerüstet werden.

Aus der DE 26 22 751 A1 ist zum Beispiel eine Vorrichtung zum Verlegen von Rohren in mehreren Abschnitten bekannt, wobei die Rohre auf einer Unterlage in Längsrichtung aneinander anschließend verlegt und hierbei in Axialrichtung gegeneinandergedrückt werden. Die Vorrichtung umfasst ein Hebezeug, welches mit einer Tragvorrichtung für einen jeweils zu verlegenden Rohrabschnitt versehen ist.

Aufgabe der vorliegenden Erfindung ist es daher, ein Rohrverlegegerät zu schaffen, mit dem Rohre weitgehend automatisiert verlegbar sind.

Diese Aufgabe wird durch ein Rohrverlegegerät mit den Merkmalen des Anspruchs 1 gelöst.

Demnach umfaßt ein Rohrverlegegerät einen langgestreckten Träger, ein an diesem angeordnetes Rohraufnahmeelement, mindestens einen Abstandshalter und eine an den Träger ansetzende Aufhängeeinheit, bestehend aus einem Drehantrieb und einer Gelenkverbindung mit zwei um 90 ° zueinander angeordneten Schwenkachsen. Ein derartiges Rohrverlegegerät, das beispielsweise am Stiel eines Hydraulikbaggers ankoppelbar ist, ermöglicht es, dass der Baggerführer eine ganze Rohrleitung weitgehend automatisiert verlegen kann. Dies ist bei dem erfindungsgemäßen Rohrverlegegerät dadurch gewährleistet, dass das an einem langgestreckten Träger angeordnete Rohraufnahmeelement das Rohr aufnehmen kann und dass beim entsprechenden Absenken des Rohres in den vorher ausgehobenen Graben über den am langgestreckten Träger angeordneten Abstandshalter der Abstand zur Muffe des bereits verlegten Rohres während des Absenken des Rohres beibehalten werden kann, so dass der Abstandshalter als Ausrichtelement während des Absenkens des Rohres dient. Um eine Ausrichtung des abzusenkenden Rohres in allen Raumrichtungen zu ermöglichen, weist die Aufhängeeinheit, mit welcher der langgestreckte Träger des Rohrverlegegerätes am Hydraulikbagger angesetzt ist, zumindest zwei Freiheitsgrade auf. Die Aufhängeeinheit weist nämlich eine Gelenkverbindung mit zwei um 90 ° zueinander angeordneten Schwenkachsen auf, die ein entsprechendes Pendeln des langgestreckten Trägers und des von diesem aufgenommenen Rohres ermöglicht. Zusätzlich ist ein Drehantrieb vorhanden, der ein Verdrehen des langgestreckten Trägers in gewünschter Richtung um einen gewünschten Winkelbetrag ermöglicht.

Erfindungsgemäß ist das Rohrverlegegerät modulartig aufgebaut, so dass die entsprechenden Teile als entsprechende Module ausgewechselt werden können. Es sind auch Zusatzmodule mit besonderen Funktionen, wie sie im folgenden noch im Einzelnen dargestellt werden, in dem Rohrverlegegerät integrierbar.

Vorteilhafte Ausgestaltungen der Erfindung ergeben sich aus den sich an den Hauptanspruch anschließenden Unteransprüchen.

So kann die Aufhängeeinheit eine Aufnahmeplatte eines Schnellkupplungssystems, beispielsweise eines Schnellkupplungssystems für einen Hydraulikbagger, enthalten. Gerade die Verwendung eines derartigen vollautomatischen Kupplungssystems fördert die Automatisierung. So kann der Baggerführer nach entsprechendem Ausheben des Grabens seine Grabschaufel automatisch ablegen und über das vollautomatische Kupplungssystem das Rohrverlegegerät an den Baggerstiel ankoppeln.

Aufgrund der Gelenkverbindung mit den zwei um 90 ° zueinander angeordneten Schwenkachsen ist eine Rohrverlegung längs und quer zum Graben bzw. Kanal mit einer Schrägstellung des Rohres möglich. Grundsätzlich reicht bei einer Verlegung mit einem Bagger längs zum Graben eine Pendelung um eine Achse, die sogenannte Y-Achse, aus. Um eine unerwünschte Pendelbewegung regulieren und sogar blockieren zu können, können die jeweiligen Schwenkachsen mit einer Pendelbremse ausgestattet sein. Um ein zu weites Pendeln zu verhindern, können auch statt dessen oder zusätzlich Anschläge vorgesehen sein, die ein Pendeln um die jeweiligen Achsen (X-Achse und Y-Achse) auf einen bestimmten Winkel, beispielsweise +/-10 ° begrenzen. Die vollständige Blockierung der Pendelung kann durch die Pendelbremse erfolgen. Diese kann aus entsprechenden Federn oder aber Bremsen, wie hydraulisch betätigten Scheibenbremsen bestehen. Alternativ oder zusätzlich können an mindestens einer der Schwenkachsen Hydraulikzylinder zur aktiven Verschwenkung oder Abbremsung der Schwenkbewegung angeordnet sein. Falls derartige Hydraulikzylinder vorgesehen sind, kann eine aktive Einstellung der Rohrneigung vorgenommen werden.

Der Drehantrieb der Aufhängeeinheit weist vorteilhaft eine Mediendurchführung, beispielsweise zum Durchleiten von Hydrauliköl, auf. Er ist in vorteilhafter Weise um 360 ° drehbar.

Zur Feineinstellung der Lage des Rohres können Zwischenschraubmodule zwischen dem Drehantrieb und dem Träger vorgesehen sein. Hierüber kann beispielsweise eine Feineinstellung der Lage in Y-Richtung oder aber eine Feinstellung der Höhe des Rohres in z-Richtung erfolgen.

Der zentrale Träger kann vorteilhaft unterhalb des Drehantriebs mit variablen Bohrbildern versehen sein. Diese Bohrbilder ermöglichen eine Montage der einzelnen Module mittels Montageschrauben in einer gewünschten Position. Durch entsprechendes Verschieben entlang des langgestreckten Trägers während der Montage kann der Schwerpunkt und somit die Neigung des Rohres einstellbar sein.

Vorteilhaft ist das Rohraufnahmeelement als Rohrgreifer ausgebildet. Gemäß einer alternativen Ausgestaltung kann aber auch das Rohraufnahmeelement als Vakuumgreifer ausgebildet sein. Bei einem derartigen Vakuumgreifer wird das Rohr durch Bilden eines Vakuums festgehalten.

Das Rohraufnahmeelement kann vorteilhaft über eine Kolben-Zylinderanordnung entlang der Längsausrichtung des langgestreckten Trägers verschiebbar sein. Über diesen Verschiebemechanismus kann das Rohraufnahmeelement an die Rohrlänge angepaßt werden. Des Weiteren kann auch hierüber der Schwerpunkt verstellt werden. Die Verstellung des Schwerpunktes kann als Grobverstellung demnach über eine entsprechende Montage des Rohraufnahmeelements an einer bestimmten Position des langgestreckten Trägers erfolgen. Die Feinjustierung dagegen erfolgt durch die Kolben-Zylindereinheit, mittels der das Rohraufnahmeelement in Längsrichtung des langgestreckten Trägers verschiebbar ist.

Der erfindungsgemäß vorgesehene Abstandshalter ist vorteilhaft als sogenannte Prismenaufnahme ausgebildet. Die Prismenaufnahme besteht aus zwei dachförmig ausgebildeten Blechen, die in einem unterschiedlichen Abstand voneinander angeordnet sind. Diese Prismenaufnahme kann einteilig oder mehrteilig ausgebildet sein. Wesentlich ist es, dass ein Teil der Prismenaufnahme am Rohr anliegt, während der andere Teil der Prismenaufnahme an der Muffe des nächstfolgenden Rohres anliegt. Hierdurch kann während des Absenkens des Rohres eine Justierung gegenüber dem bereits verlegten Rohr erfolgen. Durch die dachförmige winkelige Ausrichtung der Bleche zueinander zentriert sich die Prismenaufnahme selbst während des Absenkens des Rohrverlegegerätes in den Kanal bzw. Graben. Das freie Verschwenken nach entsprechendem Auflegen der Prismenaufnahme ist durch die pendelnde Aufhängung des langgestreckten Trägers möglich.

Soweit die Prismenaufnahme zweiteilig ausgebildet ist, können die Stufen durch entsprechende Schraubverbindungen wahlweise verstellbar sein.

Eine weitere bevorzugte Ausgestaltung der Erfindung besteht darin, dass wahlweise ein Kameramodul an dem langgestreckten Träger ansetzbar ist. Über ein derartiges Kameramodul, das in die verschiedenen Raumrichtungen über Kolben-Zylinderanordnungen teleskopierbar sein kann, kann mittels einer Kamera eine Ausrichtung des zu verlegenden Rohres zu den bereits verlegten Rohren vorgenommen werden. Die Kamerabilder, die von der an dem Kameramodul vorhanden Videokamera aufgenommen werden, können in die Führerkabine des Baggers übertragen werden, so dass hier der Baggerführer ohne weitere Anweisungen von außen eine korrekte Ausrichtung des zu verlegenden Rohres vornehmen kann.

Eine weitere Ausgestaltung der Erfindung beinhaltet ein Abstützmodul, das an dem langgestreckten Träger montierbar ist, um den Träger bei der Aufnahme schwerer Rohre auf dem Boden abzustützen. Dieses Abstützmodul kann Stützen aufweisen, die sich im Erdreich verkrallen oder auch am Verbau abstützen bzw. seitlich verklemmen. Die Abstützbeine des Abstützmoduls können dabei teleskopierbar ausgebildet sein.

Gemäß einer weiteren Ausbildung der Erfindung kann die mindestens eine als Abstandshalter ausgebildete Prismenaufnahme vorzugsweise über eine motorisch angetriebene Spindel stufenlos höheneinstellbar sein. Hierdurch kann eine genaue Anpassung auf das zu verlegende Rohr erfolgen.

Besonders vorteilhaft ist auf dem Träger zusätzlich eine Rüttelverbindung angeordnet. Hier kann beispielsweise ein rotierendes exzentrisch angeordnetes Gewicht zur Erzeugung der Rüttelbewegung verwendet werden. Diese Rüttelbewegung dient dazu, ein entsprechend verlegtes Rohr, das beispielsweise auf lockerem Erdreich in den Graben gelegt ist, durch Aufbringen einer entsprechenden Rüttelbewegung in seiner Lage auszurichten. Hierzu wird ein wenig mehr Erdreich im Graben belassen, um dann durch Aufprägen der Rüttelbewegung das Rohr auf die gewünschte Endposition einzurütteln.

Weitere Merkmale, Einzelheiten und Vorteile der Erfindung werden anhand von in der Zeichnung dargestellten Ausführungsbeispielen erläutert. Es zeigen:
- Fig. 1:: eine schematische perspektivische Darstellung eines Rohrverlegegeräts nach einer ersten Ausführungsform der vorliegenden Erfindung,
- Fig. 2:: eine alternative Ausgestaltung des Rohrverlegegeräts nach Fig. 1,
- Fig. 3:: eine weitere alternative Ausgestaltung des Rohrverlegegeräts nach Fig. 1,
- Fig. 4:: eine weitere alternative Ausgestaltung des Rohrverlegegeräts nach Fig. 1 in Draufsicht und

- Fig. 5:: eine Seitenansicht der Ausführungsform des Rohrverlegegeräts nach Fig. 4.

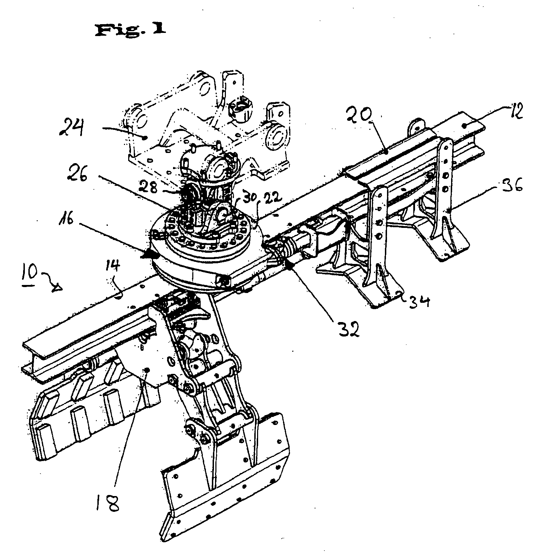

Das Rohrverlegegerät 10 nach der ersten Ausführungsvariante, die in Fig. 1 dargestellt ist, weist einen langgestreckten Träger 12 auf, der im hier dargestellten Ausführungsbeispiel als I-Träger ausgebildet ist. Der Träger weist eine Reihe von Bohrlöchern 14 auf, die entsprechend vorgesehener Bohrbilder auf den Träger ausgebildet sind. Entsprechend dieser Bohrbilder können die verschiedenen Module des Rohrverlegegerätes mit dem langgestreckten Träger verschraubt werden. In der Ausführungsvariante gemäß Fig. 6 ist am langgestreckten Träger 12 zunächst eine Aufhängeeinheit 16, ein Rohraufnahmeelement 18 und eine Abstandshalteeinheit 20 angeordnet.

Die Aufhängeeinheit 16 besteht aus einem Drehantrieb 22, der eine 360 ° Drehung des langgestreckten Trägers 12 ermöglicht. Die Aufhängeeinheit beinhaltet weiter eine Aufnahmeplatte 24 eines vollautomatischen Schnellkupplungssystem, das eine vollautomatische Aufnahme an einen hier nicht näher dargestellten Hydraulikbagger ermöglicht. Zwischen dem Drehantrieb 22 und der Aufnahmeplatte 24 ist eine Gelenkverbindung 26 mit zwei um 90 ° zueinander angeordneten Schwenkachsen 28 und 30 angeordnet. Die Schwenkachse 28 bildet hierbei eine X-Achse während die Schwenkachse 30 eine Y-Achse bildet. Ein Verschwenken um die Schwenkachse 28 ist also ein Verschwenken in X-Richtung und ein Verschwenken um die Y-Achse 30 ist ein Verschwenken in Y-Richtung. In hier nicht näher dargestellter Art und Weise kann eine Dämpfung der Pendelung der Schwenkbewegung der Schwenkachse 28 durch eine hydraulische Scheibenbremse erfolgen. Ein Verschwenken um die Schwenkachse 30 kann durch hier nicht näher dargestellte Kolben-Zylinderanordnungen willkürlich erfolgen bzw. abgebremst werden.

Das Rohraufnahmeelement 18 ist im hier dargestellten Ausführungsbeispiel als Rohrgreifer ausgebildet, der konventionell aufgebaut ist und daher in seiner Funktion hier nicht näher erläutert werden muß. Der Rohrgreifer 18 ist entlang des langgestreckten Trägers 12 verschiebbar, wobei die Verschiebung über eine Kolben-Zylinderanordnung 32 erfolgt.

Der Abstandshalter 20 besteht aus einer sogenannten Prismenaufnahme mit zwei in Form eines Daches aufgebildeten Blechen, die voneinander beabstandet sind. Der Abstand der Prismenaufnahme 34 von der Prismenaufnahme 36 entspricht dem Abstand zwischen der Außenfläche des Rohres und der Außenfläche der Rohrmuffe. Die Prismenaufnahme 36 ist dazu bestimmt, sich auf die Rohrmuffe des bereits verlegten Rohres aufzulegen, während die Prismenaufnahme 34 am durch den Rohrgreifer 18 aufgenommenen Rohr (hier nicht dargestellt) anlegt. Die Prismenaufnahmen 34 und 36 sind in ihrem Abstand durch entsprechende Schraublöcher verstellbar. Der gesamte Abstandshalter 20 ist auch als Modul ausgebildet und kann entsprechend in die vorgesehenen Bohrlöcher am langgestreckten Träger in einer gewünschten Position fixiert werden.

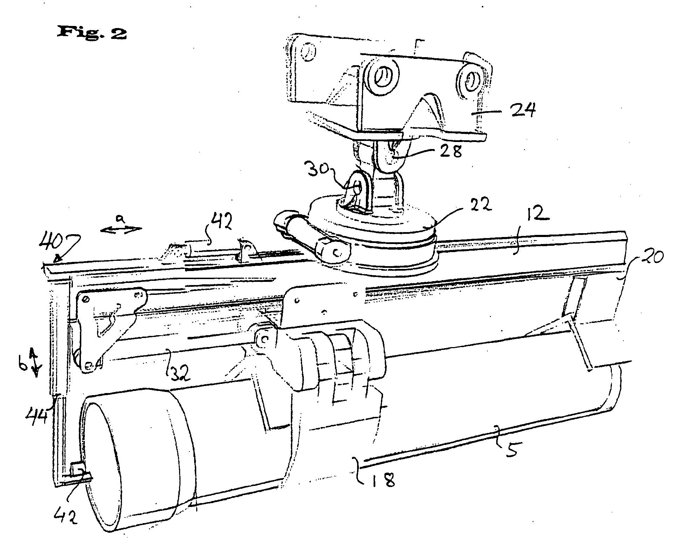

In Fig. 2 ist eine ähnliche Ausführungsvariante des Rohrverlegegeräts zu derjenigen gemäß Fig. 1 dargestellt. Identische Teile sind hier mit identischen Bezugszeichen versehen. Im dort dargestellten Ausführungsbeispiel ist ein Rohr 5 dargestellt, das von dem Rohrgreifer 18 umgriffen ist. Weiterhin ist im Unterschied zu der Ausführungsform gemäß Fig. 1 der Abstandshalter 20 einteilig ausgebildet, wobei hier das Aufnahmeprisma einteilig ausgebildet ist. Der Abstand zwischen den Aufnahmeprismen 34 und 36 wird in dieser einteiligen Ausführung durch eine entsprechende Stufe gebildet. In der Ausführungsvariante gemäß Fig. 2 ist zusätzlich ein Kameramodul 40 am langgestreckten Träger 12 montiert. Über dieses Kameramodul 40 wird eine Videokamera 42 getragen, die zum Ausrichten des zu verlegenden Rohres 5 mit den bereits verlegten Rohren (hier nicht dargestellt) dient. Über eine entsprechende Kolben-Zylinderanordnung 42 und einen Teleskopträger 44 ist das Kameramodul jeweils in Doppelpfeilrichtung a und b in Fig. 2 verschiebbar.

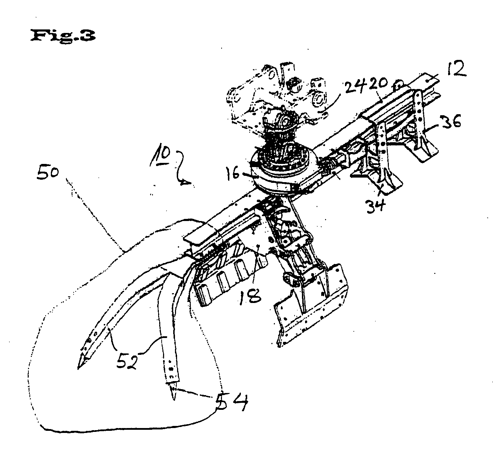

In der Fig. 3 ist eine weitere Ausführungsvariante der Erfindung dargestellt, die im wesentlichen derjenigen gemäß Fig. 1 entspricht. Gleiche Teile sind hier wiederum mit gleichen Bezugszeichen versehen. Hier ist zusätzlich ein Abstützmodul 50 vorgesehen, das ebenfalls am langgestreckten Träger 12 montiert wird. Das Abstützmodul 50 weist zwei teleskopierbare Abstützbeine 52 auf, an deren äußeren Enden Spitzen 54 vorgesehen sind, die sich im Erdreich verhaken können. Über das Abstützmodul kann der langgestreckte Träger 12 des Rohrverlegegerätes bei der Aufnahme schwerer Rohre auf dem Boden abgestützt werden.

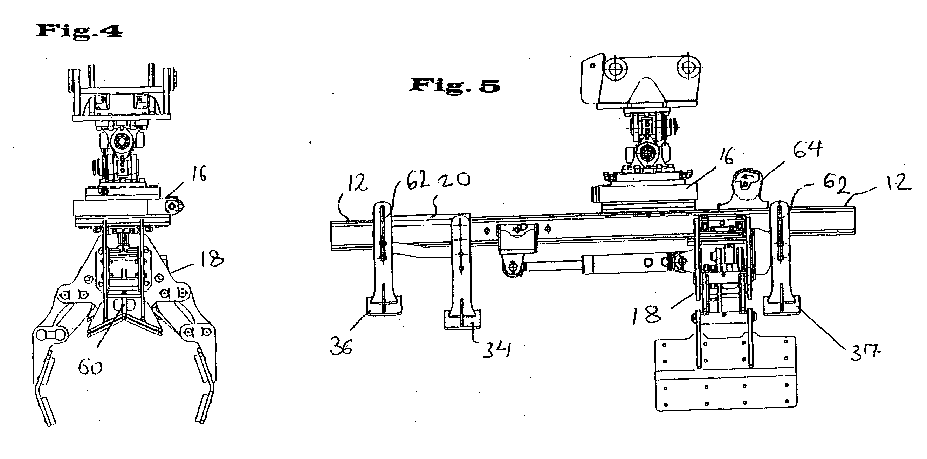

In den Figuren 4 und 5 ist ein weitere alternative Ausgestaltung der Erfindung gezeigt. Dort sind drei Aufnahmeprismen 34, 36 und 37 vorhanden. Diese Prismen sind über motorisch antreibbare Spindeln 60 und entsprechende Langlochführungen 62 stufenlos in ihrer Höhe verstellbar. Die Antriebsmotoren für die Spindeln sind hier nicht näher dargestellt. Hierdurch können die Aufnahmeprismen 34, 36 und 37 an den Rohrdurchmesser des zu verlegenden Rohres angepaßt werden.

Zusätzlich ist auf dem langgestreckten Träger 12 eine Rüttelvorrichtung 64 angeordnet, über welche das gesamte Rohrverlegegerät in eine Rüttelbewegung versetzbar ist. Diese Rüttelbewegung kann auf das zu verlegende Rohr übertragen werden, so dass das Rohr in das Erdreich, in welches es verlegt wird auf die gewünschte Höhenposition sinken kann. Man wird hier also beim Ausheben des Grabens, in welchem das Rohr verlegt werden soll ein wenig mehr Erdreich im Bodenbereich belassen, so dass über die Rüttelbewegung die endgültige Höhe des Rohres eingestellt werden kann.

## Patentansprüche

1. Rohrverlegegerät (10) mit einem lang gestreckten Träger (12), einem an diesem angeordneten Rohraufnahmeelement (18) und einer an dem Träger (12) ansetzenden Aufhängeeinheit (16), bestehend aus einem Drehantrieb (22) und einer Gelenkverbindung (26) mit zwei um 90° zueinander angeordneten Schwenkachsen (28, 30),
**gekennzeichnet durch**
mindestens einen Abstandshalter (20), welcher an dem langgestreckten Träger (12) angeordnet ist und beim Absenken eines am Rohraufnahmeelement (18) aufgenommenen Rohres (5) auf der Muffe eines bereits verlegten Rohres (5) aufgelegt werden kann.

2. Rohrverlegegerät (10) nach Anspruch 1, **dadurch gekennzeichnet, dass** die Aufhängeeinheit (16) eine Aufnahmeplatte (24) eines Schnellkupplungssystems enthält.

3. Rohrverlegegerät (10) nach Anspruch 1 oder 2, **dadurch gekennzeichnet, dass** zumindest eine der Schwenkachsen (28, 30) eine Pendelbremse aufweist.

4. Rohrverlegegerät (10) nach Anspruch 3, **dadurch gekennzeichnet, dass** die Pendelbremse durch Federn oder Bremsen, beispielsweise eine hydraulisch betätigte Scheibenbremse, gebildet ist.

5. Rohrverlegegerät (10) nach einem der vorangehenden Ansprüche, **dadurch gekennzeichnet, dass** benachbart zu mindestens einer der Schwenkachsen (28, 30) Hydraulikzylinder zur aktiven Verschwenkung oder zur Abbremsung der Schwenkbewegung angeordnet sind.

6. Rohrverlegegerät (10) nach einem der vorangehenden Ansprüche, **dadurch gekennzeichnet, dass** der Drehantrieb (22) eine 360°-Drehung ermöglicht und eine Mediendurchführung aufweist.

7. Rohrverlegegerät (10) nach einem der vorangehenden Ansprüche, **dadurch gekennzeichnet, dass** zwischen Drehantrieb (22) und Träger (12) ein Zwischenschraubmodul zur Feineinstellung der Lage (in y-Richtung) des zu verlegenden Rohres (5) zwischengeschaltet ist.

8. Rohrverlegegerät (10) nach einem der vorangehenden Ansprüche, **dadurch gekennzeichnet, dass** zwischen Drehantrieb (22) und Träger (12) ein Zwischenschraubmodul zur Feineinstellung der Höhe (in z-Richtung) des zu verlegenden Rohres (5) zwischengeschaltet ist.

9. Rohrverlegegerät (10) nach einem der vorangehenden Ansprüche, **dadurch gekennzeichnet, dass** der lang gestreckte Träger (12) verschiedene Bohrbilder zur Aufnahme entsprechender Montageschrauben der am Träger (12) montierten Module aufweist, so dass die einzelnen Module an unterschiedlichen Positionen des Trägers (12) montierbar sind.

10. Rohrverlegegerät (10) nach einem der vorangehenden Ansprüche, **dadurch gekennzeichnet, dass** das Rohraufnahmeelement (18) ein Rohrgreifer (18) ist.

11. Rohrverlegegerät (10) nach einem der vorangehenden Ansprüche, **dadurch gekennzeichnet, dass** das Rohraufnahmeelement (18) ein Vakuum-Greifer ist.

12. Rohrverlegegerät (10) nach einem der vorangehenden Ansprüche, **dadurch gekennzeichnet, dass** das Rohraufnahmeelement (18) über eine Kolben-Zylinderanordnung (32) entlang der Längsausrichtung des lang gestreckten Trägers (12) verschiebbar ist.

13. Rohrverlegegerät (10) nach einem der vorangehenden Ansprüche, **dadurch gekennzeichnet, dass** der Abstandshalter (20) als Prismenaufnahme (34, 36) ausgebildet ist.

14. Rohrverlegegerät (10) nach Anspruch 13 **dadurch gekennzeichnet, dass** die Prismenaufnahme (34, 36) eine Stufe aufweist, so dass sich ein Teil der Prismenaufnahme (34, 36) an ein Rohr (5) und der andere Teil der Prismenaufnahme (34, 36) an die Muffe eines Rohres (5) anlegen kann.

15. Rohrverlegegerät (10) nach Anspruch 14, **dadurch gekennzeichnet, dass** die Prismenaufnahme (34, 36) zweiteilig ausgebildet ist und dass die Stufen wahlweise verstellbar sind.

16. Rohrverlegegerät (10) nach einem der vorangehenden Ansprüche, **dadurch gekennzeichnet, dass** am Träger (12) ein Kameramodul (40) angeordnet ist.

17. Rohrverlegegerät (10) nach Anspruch 16, **dadurch gekennzeichnet, dass** das Kameramodul (40) über Kolben-Zylindereinheiten (42) positionierbar bzw. wegklappbar ist.

18. Rohrverlegegerät (10) nach einem der vorangehenden Ansprüche, **dadurch gekennzeichnet, dass** ein Abstützmodul (50) an dem Träger (12) montierbar ist, um den Träger (12) bei der Aufnahme schwerer Rohre (5) auf dem Boden abzustützen.

19. Rohrverlegegerät (10) nach Anspruch 17, **dadurch gekennzeichnet, dass** das Abstützmodul (50) teleskopierbare Abstützbeine (52) aufweist.

20. Rohrverlegegerät (10) nach einem der vorangehenden Ansprüche, **dadurch gekennzeichnet, dass** der mindestens eine als Prismenaufnahme (34, 36) ausgebildete Abstandshalter (20) stufenlos höhenverstellbar ist.

21. Rohrverlegegerät (10) nach Anspruch 20, **dadurch gekennzeichnet, dass** die stufenlose Verstellbarkeit des mindestens einen als Prismenaufnahme (34, 36) ausgebildeten Abstandshalters (20) über eine angetriebene Spindel (60) stufenlos erfolgt.

22. Rohrverlegegerät (10) nach einem der vorangehenden Ansprüche, **dadurch gekennzeichnet, dass** unmittelbar oder mittelbar auf dem Träger (12) ein Rüttelgerät (64) angeordnet ist, um das gesamte Rohrverlegegerät (10) in eine Rüttelbewegung zu versetzen.

## Claims

1. A pipe laying apparatus (10) having an elongated carrier (12), a pipe receiving element (18) arranged thereat and a suspension unit (16) starting at the carrier (12) and comprising a rotary drive (22) and a hinge connection (26) having two pivot axles (28, 30) arranged at 90° to one another,
**characterised by**
at least one spacer (20) which is arranged at the elongated carrier (12) and which can be placed on the sleeve of an already laid pipe (6) on the lowering of a pipe (5) received at the pipe receiving element (18).

2. A pipe laying apparatus (10) in accordance with claim 1, **characterised in that** the suspension unit (16) includes a receiver plate (24) of a fast-coupling system.

3. A pipe laying apparatus (10) in accordance with claim 1 or claim 2, **characterised in that** at least one of the pivot axles (28, 30) has a swing brake.

4. A pipe laying apparatus (10) in accordance with claim 3, **characterised in that** the swing brake is formed by springs or brakes, for example by a hydraulically actuated disc brake.

5. A pipe laying apparatus (10) in accordance with one of the preceding claims, **characterised in that** hydraulic cylinders for active pivoting or for the braking of the pivot movement are arranged adjacent to at least one of the pivot axles (28, 30).

6. A pipe laying apparatus (10) in accordance with one of the preceding claims, **characterised in that** the rotary drive (22) enables a 360° rotation and has a media passage.

7. A pipe laying apparatus (10) in accordance with one of the preceding claims, **characterised in that** an intermediate screw module is interposed between the rotary drive (22) and the carrier (12) for the fine adjustment of the position (in the y direction) of the pipe (5) to be laid.

8. A pipe laying apparatus (10) in accordance with one of the preceding claims, **characterised in that** an intermediate screw module is interposed between the rotary drive (22) and the carrier (12) for the fine adjustment of the height (in the z direction) of the pipe (5) to be laid.

9. A pipe laying apparatus (10) in accordance with one of the preceding claims, **characterised in that** the elongated carrier (12) has different drill patterns for receiving corresponding assembly screws of the modules mounted at the carrier (12) so that the individual modules can be mounted at different positions of the carrier (12).

10. A pipe laying apparatus (10) in accordance with one of the preceding claims, **characterised in that** the pipe receiving element (18) is a pipe gripper (18).

11. A pipe laying apparatus (10) in accordance with one of the preceding claims, **characterised in that** the pipe receiving element (18) is a vacuum gripper.

12. A pipe laying apparatus (10) in accordance with one of the preceding claims, **characterised in that** the pipe receiving element (18) is displaceable along the longitudinal direction of the elongated carrier (12) via a piston-in-cylinder arrangement (32).

13. A pipe laying apparatus (10) in accordance with one of the preceding claims, **characterised in that** the spacer (20) is designed as a prism mount (34, 36).

14. A pipe laying apparatus (10) in accordance with claim 13, **characterised in that** the prism mount (34, 36) has a step so that a part of the prism mount (34, 36) can abut at a pipe (5) and the other part of the prism mount (34, 36) can abut at the sleeve of a pipe (5).

15. A pipe laying apparatus in accordance with claim 14, **characterised in that** the prism mount (34, 36) is formed in two parts; and **in that** the steps are selectively adjustable.

16. A pipe laying apparatus (10) in accordance with one of the preceding claims, **characterised in that** a camera module (40) is arranged at the carrier (12).

17. A pipe laying apparatus (10) in accordance with claim 16, **characterised in that** the camera module (40) can be positioned and/or flipped away via piston-in-cylinder units (42).

18. A pipe laying apparatus (10) in accordance with one of the preceding claims, **characterised in that** a support module (50) can be mounted at the carrier (12) to support the carrier (12) in the receiving of heavy pipes (5) on the ground.

19. A pipe laying apparatus (10) in accordance with claim 17, **characterised in that** the support module (50) has telescopic support legs (52).

20. A pipe laying apparatus (10) in accordance with one of the preceding claims, **characterised in that** the at least one spacer (20) designed as a prism mount (34, 36) is continuously vertically adjustable.

21. A pipe laying apparatus (10) in accordance with claim 20, **characterised in that** the continuous adjustability of the at least one spacer (20) designed as a prism mount (34, 36) takes place continuously via a driven spindle (60).

22. A pipe laying apparatus (10) in accordance with one of the preceding claims, **characterised in that** a shaking device (64) is arranged directly or indirectly at the carrier (12) to set the entire pipe laying apparatus (10) into a shaking movement.

## Revendications

1. Appareil de pose de tuyaux (10) avec un support étiré en longueur (12), un élément récepteur de tuyaux (18) disposé sur celui-ci et une unité de suspension (16) s'appliquant sur le support (12), se composant d'un entraînement rotatif (22) et d'un assemblage à rotule (26) avec deux axes de pivotement disposés à 90° l'un par rapport à l'autre (28, 30),
**caractérisé par**
au moins un écarteur (20), qui est disposé sur le support étiré en longueur (12) et peut être posé sur le manchon d'un tuyau déjà posé (5) à l'abaissement d'un tuyau (5) logé sur l'élément récepteur de tuyaux (18).

2. Appareil de pose de tuyaux (10) selon la revendication 1, **caractérisé en ce que** l'unité de suspension (16) comporte une plaque réceptrice (24) d'un système à raccord rapide.

3. Appareil de pose de tuyaux (10) selon les revendications 1 ou 2, **caractérisé en ce qu'**au moins un des axes de pivotement (28, 30) présente un frein d'oscillation.

4. Appareil de pose de tuyaux (10) selon la revendication 3, **caractérisé en ce que** le frein d'oscillation est constitué par des ressorts ou des freins, par exemple un frein de poulie actionné hydrauliquement.

5. Appareil de pose de tuyaux (10) selon une quelconque des revendications précédentes, **caractérisé en ce que**, dans le voisinage d'au moins un des axes de pivotement (28, 30), des vérins hydrauliques sont disposés pour le pivotement actif ou pour le freinage du mouvement de pivotement.

6. Appareil de pose de tuyaux (10) selon une quelconque des revendications précédentes, **caractérisé en ce que** l'entraînement rotatif (22) permet une rotation à 360° et présente un passage de liquides.

7. Appareil de pose de tuyaux (10) selon une quelconque des revendications précédentes, **caractérisé en ce qu'**entre l'entraînement rotatif (22) et le support (12), un module de vissage intermédiaire est inséré pour le réglage fin de la position (dans la direction y) du tuyau à poser (5).

8. Appareil de pose de tuyaux (10) selon une quelconque des revendications précédentes, **caractérisé en ce qu'**entre l'entraînement rotatif (22) et le support (12), un module de vissage intermédiaire est inséré pour le réglage fin de la hauteur (dans la direction z) du tuyau à poser (5).

9. Appareil de pose de tuyaux (10) selon une quelconque des revendications précédentes, **caractérisé en ce que** le support étiré en longueur (12) présente différents gabarits de perçage destinés à la réception de vis de montage correspondantes des modules montés sur le support (12), de sorte que les différents modules sont montables sur différentes positions du support (12).

10. Appareil de pose de tuyaux (10) selon une quelconque des revendications précédentes, **caractérisé en ce que** l'élément récepteur de tuyaux (18) est un grappin d'entubage (18).

11. Appareil de pose de tuyaux (10) selon une quelconque des revendications précédentes, **caractérisé en ce que** l'élément récepteur de tuyaux (18) est un grappin à vide.

12. Appareil de pose de tuyaux (10) selon une quelconque des revendications précédentes, **caractérisé en ce que** l'élément récepteur de tuyaux (18) est mobile par l'intermédiaire d'une disposition vérin-piston (32) le long de l'alignement longitudinal du support étiré en longueur (12).

13. Appareil de pose de tuyaux (10) selon une quelconque des revendications précédentes, **caractérisé en ce que** l'écarteur (20) est constitué comme support prismatique (34, 36).

14. Appareil de pose de tuyaux (10) selon la revendication 13, **caractérisé en ce que** le support prismatique (34, 36) présente un gradin, de sorte qu'une partie du support prismatique (34, 36) peut s'appuyer sur un tuyau (5) et l'autre partie du support prismatique (34, 36) sur le manchon d'un tuyau (5).

15. Appareil de pose de tuyaux (10) selon la revendication 14, **caractérisé en ce que** le support prismatique (34, 36) est constitué en deux parties et **en ce que** les gradins sont réglables en option.

16. Appareil de pose de tuyaux (10) selon une quelconque des revendications précédentes, **caractérisé en ce que** sur le support (12), un module de caméra (40) est disposé.

17. Appareil de pose de tuyaux (10) selon la revendication 16, **caractérisé en ce que** le module de caméra (40) est positionnable et/ou rabattable par l'intermédiaire d'unités vérin-piston (42).

18. Appareil de pose de tuyaux (10) selon une quelconque des revendications précédentes, **caractérisé en ce qu'**un module d'appui (50) est montable sur le support (12), afin d'appuyer sur le sol le support (12) à la réception de tuyaux lourds (5).

19. Appareil de pose de tuyaux (10) selon la revendication 17, **caractérisé en ce que** le module d'appui (50) présente des jambes d'appui télescopiques (52).

20. Appareil de pose de tuyaux (10) selon une quelconque des revendications précédentes, **caractérisé en ce qu'**au moins un des écarteurs (20) constitué comme support prismatique (34, 36) est réglable en hauteur et en continu.

21. Appareil de pose de tuyaux (10) selon la revendication 20, **caractérisé en ce que** le réglage possible en continu d'au moins un des écarteurs (20) constitué comme support prismatique (34, 36) s'effectue en en continu par l'intermédiaire d'une broche entraînée (60).

22. Appareil de pose de tuyaux (10) selon une quelconque des revendications précédentes, **caractérisé en ce qu'**indirectement ou directement sur le support (12), un vibrateur (64) est disposé, pour déplacer l'appareil de pose de tuyaux (10) complet en un ébranlement.
